# EUROPÄISCHE PATENTSCHRIFT

(11) **EP 3 776 904 B1**
(45) Veröffentlichungstag und Bekanntmachung des Hinweises auf die Patenterteilung: **22.07.2026**
(21) Anmeldenummer: 19719416.0
(22) Anmeldetag: 14.03.2019
(51) Int. Cl.: H04B 7/06, H04B 7/08, H04W 88/06

(54) **KOMMUNIKATIONSVORRICHTUNG, FAHRZEUG, VERFAHREN UND COMPUTERPROGRAMM ZUR KOMMUNIKATION IN EINEM MOBILKOMMUNIKATIONSSYSTEM**
COMMUNICATION DEVICE, VEHICLE, METHOD AND COMPUTER PROGRAM FOR COMMUNICATION IN A MOBILE COMMUNICATION SYSTEM
DISPOSITIF DE COMMUNICATION, VÉHICULE, PROCÉDÉ ET PROGRAMME INFORMATIQUE DE COMMUNICATION DANS UN SYSTÈME DE COMMUNICATION MOBILE

(30) Priorität: 27.03.2018 DE 102018204639
(43) Veröffentlichungstag der Anmeldung: 17.02.2021
(73) Patentinhaber: Bayerische Motoren Werke Aktiengesellschaft, 80809 München (DE)
(72) Erfinder: GOZALVEZ SERRANO, David, 81373 München (DE); POSSELT, Adrian, 80939 München (DE)
(86) Internationale Anmeldenummer: PCT/DE2019/100232
(87) Internationale Veröffentlichungsnummer: WO 2019/185083

(56) Entgegenhaltungen:
- DE-A1- 102012 014 547
- DE-A1- 102012 014 549
- DE-A1- 102015 122 543
- DE-A1- 102016 215 781
- US-A1- 2011 249 576

## Beschreibung

### Technisches Gebiet

Ausführungsbeispiele befassen sich mit einer Kommunikationsvorrichtung, einem Fahrzeug, einem Verfahren und einem Computerprogramm zur Kommunikation in einem Mobilkommunikationssystem, insbesondere aber nicht ausschließlich mit einem Konzept zur adaptiven Auswahl von Mobilfunkantennen an einem Fahrzeug zur parallelen Kommunikation in einem Mobilkommunikationssystem.

### Hintergrund

Derzeit werden bereits mehrere Generationen von Mobilkommunikationssystemen verwendet, um digitale Datendienste anzubieten. Momentan sind die zweite, die dritte und die vierte Mobilfunkgeneration (2G, 3G, 4G) parallel im Betrieb. In 2G- als auch in 3G-Mobilfunknetzen wird Sprache leitungsvermittelt (engl. circuit switched) übertragen, während Daten paketvermittelt (engl. packet switched) übertragen werden. 4G bzw. Long Term Evolution (LTE) wurde ursprünglich als reines paketvermitteltes Datennetz konzipiert. Sprachanrufe werden mittels Circuit Switched FallBack (CSFB) in einem 2G- bzw. 3G-Mobilfunknetz ausgeführt. Mit Einführung von Voice over LTE (VoLTE) steht in den 4G-Mobilfunknetzen nunmehr nach und nach ein paketvermittelter Sprachdienst zur Verfügung, der CSFB überflüssig machen kann. In einem 2G-Mobilfunknetz können Daten bzw. Sprache nur sequentiell, in 3G- bzw. 4G-Mobilfunknetzen auch parallel übertragen werden.

Im Fahrzeugbereich haben sich fest verbaute (d.h. verlötete) Benutzeridentifikationsmodule, Subscriber Identity Module-Karten (SIM-Karten, auch USIM "Universal SIM"), etabliert. Die Daten auf einer SIM-Karte können dabei auch über die Luftschnittstelle ausgetauscht werden. Solche Verfahren bzw. Karten sind z.B. unter den Bezeichnungen "eSIM", "whitelabel SIM" oder "SIM subscription management" bekannt.

In einem Mobilfunkmodul eines Fahrzeugs kann eine SIM-Karte fest verbaut sein. Um eine Dienstqualität (z.B. für eine Notruffunktionalität) zu gewährleisten, schließt ein Fahrzeughersteller einen Mobilfunkvertrag mit einem Netzbetreiber ab. Dieser Mobilfunkvertrag für Dienste des vernetzten Fahrens kann jedoch nicht für Fahrzeugnutzerdienste (z.B. persönliche Telefonie) genutzt werden. In einem 2G-Mobilfunknetz blockiert ein Sprachanruf beispielsweise die Fähigkeit des Kommunikationsmodems, parallel Daten auszutauschen. Somit wären herstellerspezifische Dienste des vernetzten Fahrzeugs blockiert. So richten sich Anrufe beispielsweise an die Telefonnummer des Kunden, damit an das Handy des Kunden und nicht an das Fahrzeug. Datendienste im Fahrzeug werden auf der Grundlage des Mobilfunkvertrags des Fahrzeugherstellers ausgeführt.

Aktuell können daher Fahrzeugmobilfunkkommunikationssysteme über eine oder mehrere SIM-Karten bzw. eSIM-Karten (von engl. embedded SIM, eingebettete SIM) verfügen. Mehrere SIM-Karten dienen unterschiedlichen Kommunikationszwecken im Fahrzeug und werden in der Regel unterschiedlichen Anwendungsfällen zugeordnet. Eine SIM-Karte kann beispielsweise dem Mobilfunkvertrag des Fahrers zugeordnet sein und eine andere dem Mobilfunkvertrag des OEMs (von engl. Original Equipment Manufacturer, Originalausrüster) für die Dienste des vernetzen Fahrzeugs. Die unterschiedlichen SIM-Karten im Fahrzeug werden in der Regel parallel betrieben, indem mehrere Mobilfunkverbindungen (jeder Verbindung wird eine SIM-Karte zugeordnet) gleichzeitig aufrechterhalten werden.

Für den Parallelbetrieb mehrerer Mobilfunkverbindungen werden normalerweise unterschiedliche Antennenelemente verwendet, die an verschiedenen Orten in dem Fahrzeug positioniert sind.

Der Parallelbetrieb von mehreren Mobilfunkverbindungen im Fahrzeug kann Schwierigkeiten im Vergleich zu dem Betrieb einer einzigen Verbindung (über nur eine SIM-Karte) mit sich bringen. Konkret können Interferenzen zwischen den Mobilfunkverbindungen aufgrund der kurzen Entfernung zwischen Antennenelementen auftreten, bzw. ein Übersprechen zwischen den einzelnen Signalpfaden. Dies kann beispielsweise dadurch gelindert werden, dass die Antennenelemente ausreichend weit entfernt von einander positioniert werden, um eine ausreichende Isolation zu erreichen. Es besteht daher ein Bedarf ein verbessertes Konzept zur gleichzeitigen Kommunikation in einem Mobilkommunikationssystem zu schaffen.

Ausführungsbeispielen liegt die Erkenntnis zugrunde, dass infolge der eingeschränkten Anzahl von Verbau- oder Anbauorten im Fahrzeug für die Integration von Antennenelementen und der ständig zunehmenden Anzahl von Antennenelementen in neuen Mobilfunkstandards sich eine ausreichende Isolation zwischen Antennenelementen nicht immer erreichen lässt. Diese Isolation ist von den Frequenzbändern jeder Mobilfunkkommunikation abhängig und kann im Laufe der Zeit je nach Mobilfunkbetreiber und Netzwerkcharakteristiken variieren. Darüber hinaus, braucht die Anzahl von Antennenelementen nicht immer der maximalen Anzahl von Antennen zu entsprechen, die vom Modem bzw. von den Modems für jede im Fahrzeug verbaute SIM-Karte unterstützt werden. Ausführungsbeispiele schaffen daher eine dynamische Auf- und Zuteilung von Antennenelementen/Mobilfunkantennen, beispielsweise über in einem Fahrzeug verbaute SIM-Karten aufgrund des Kommunikationsbedarfs jeder SIM-Karte und der erforderlichen Isolation zwischen den unterschiedlichen Mobilfunkverbindungen. Daraus folgend können Antennenelemente/Mobilfunkantennen einer SIM-Karte dynamisch (d.h. im Laufe einer Mobilfunkkommunikation) zugeordnet werden, wenn diese einen erhöhten Kommunikationsbedarf aufweisen, wie beispielsweise aufgrund einer Datenrate, einer Zuverlässigkeit oder einer Latenz, wobei die Zuordnung dieser Antennenelemente die minimale Isolation zwischen den Antennenelementen/Mobilfunkantennen berücksichtigen kann.

Ein Ausführungsbeispiel gemäß Anspruch 1 schafft eine Kommunikationsvorrichtung zur Kommunikation in einem Mobilkommunikationssystem.

Ein Ausführungsbeispiel gemäß Anspruch 10 schafft ein Verfahren zur Kommunikation in einem Mobilkommunikationssystem.

Ein weiteres Ausführungsbeispiel ist ein Computerprogramm gemäß Anspruch 11.

Die Patentanmeldung DE102012014549A1 offenbart eine Schaltungsanordnung für eine Mobilfunkeinrichtung eines Kraftwagens.

Die Patentanmeldung DE102015122543A1 offenbart Kommunikationsendgeräte und Verfahren zum Auswählen einer Kommunikationsantenne.

Die Patentanmeldung DE102012014547A1 offenbart eine Schaltungsanordnung für eine Mobilfunkeinheit eines Kraftwagens mit zwei Mobilfunkmodulen, die für eine Mobilfunkübertragung gemäß unterschiedlichen Mobilfunkstandards ausgebildet ist.

Die Patentanmeldung US2011249576A1 offenbart Verfahren zum Teilen von Antennen zwischen Mobilfunkverbindungen in einer Kommunikationsvorrichtung.

### Figurenkurzbeschreibung

Ausführungsbeispiele werden nachfolgend bezugnehmend auf die beiliegenden Figuren näher erläutert. Es zeigen:
- Fig. 1: zeigt ein Blockdiagramm eines Ausführungsbeispiels einer Kommunikationsvorrichtung und ein Ausführungsbeispiel eines Fahrzeugs;
- Fig. 2: zeigt ein weiteres Ausführungsbeispiel einer Kommunikationsvorrichtung für ein Fahrzeug; und
- Fig. 3: zeigt ein Blockdiagramm eines Ausführungsbeispiels eines Verfahrens zur Kommunikation.

### Beschreibung

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können.

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer", "eine", "eines" und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", aufweist" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, solange dies hierin nicht ausdrücklich anders definiert ist.

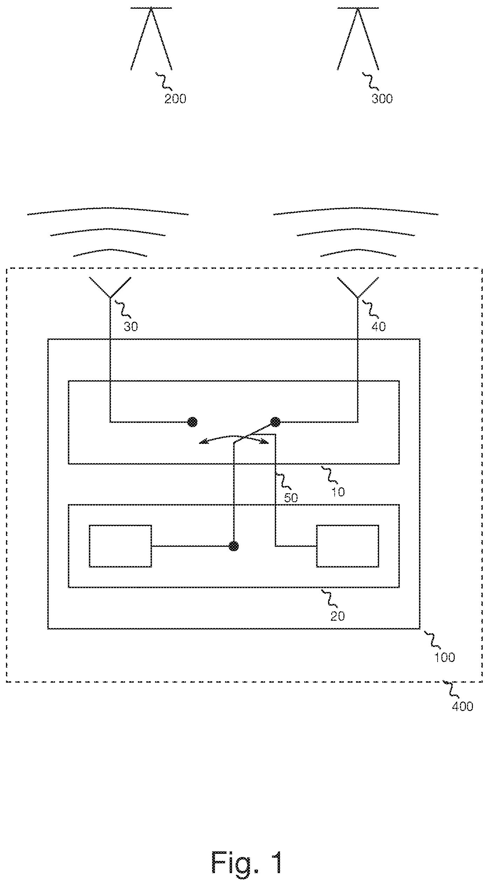

Fig. 1 zeigt ein Blockdiagramm eines Ausführungsbeispiels einer Kommunikationsvorrichtung 100 und ein Ausführungsbeispiel eines Fahrzeugs 400. Fig. 1 illustriert eine Kommunikationsvorrichtung 100 zur Kommunikation in einem oder mehreren Mobilkommunikationssystemen 200, 300. Die Kommunikationsvorrichtung 100 umfasst eine Auswahleinrichtung 10 zur Verkopplung einer oder mehrerer Mobilfunkantennen 30, 40 mit ein oder mehreren Signalpfaden basierend auf einem Auswahlsignal. Die Kommunikationsvorrichtung 100 umfasst ferner ein Sendeempfängermodul 20, das mit der Auswahleinrichtung gekoppelt ist und das ausgebildet ist, um das Auswahlsignal 50 zu generieren. Das Sendeempfängermodul 20 ist ferner ausgebildet, um über die gekoppelten Mobilfunkantennen 30, 40 in den ein oder mehreren Mobilkommunikationssystemen 200, 300 zu kommunizieren, wobei das Sendeempfängermodul 20 ausgebildet ist, um basierend auf zwei oder mehr Benutzeridentifikationen unterschiedliche Mobilfunkantennen 30, 40 zur Kommunikation in den ein oder mehreren Mobilkommunikationssystemen 200, 300 über das Auswahlsignal 50 auszuwählen, wobei das Sendeempfängermodul 20 ausgebildet ist, um bei der Auswahl eine Isolation und/oder eine Korrelation zwischen den Mobilfunkantennen 30, 40 zu berücksichtigen.

In einem weiteren Ausführungsbeispiel können auch drei Antennenelemente verwendet werden. Dabei kann ein mittleres Antennenelement zwischen zwei Sendeempfängermodulen bzw. Benutzeridentifikationen umgeschaltet werden. Die zwei weiteren Antennenelemente können stattdessen fest an jede Benutzeridentifikation gebunden sein, wie im Folgenden noch näher erläutert wird. Die Umschaltung kann beispielsweise auf Basis von Störungen zwischen den Antennenelementen und Anforderungen der laufenden Anwendungen erfolgen.

In manchen Ausführungsbeispielen können solche Störungen auch gemessen werden, beispielsweise Interferenzen oder Übersprechen von einem Antennenelement auf ein anderes. Dabei kann ein Signal mit einer bestimmten Frequenz auf ein Antennenelement geleitet werden und entsprechend ein Störsignal auf den anderen Antennenelementen für die Frequenz gemessen werden. Durch Messungen der Frequenz im Betrieb (ggf. auch durch künstliche Iteration) sowie der Antennenelemente kann eine Art frequenzabhängige/wellenlängenabhängige Störmatrix bestimmt werden, die in Abhängigkeit der Frequenz ein entsprechendes Maß für die Störung, die Interferenz oder das Übersprechen für alle betrachteten Antennenelementkombinationen enthält. Eine solche Matrix kann dabei als Tabelle (auch engl. Look-up Table) gespeichert werden, sodass die gegenseitigen Störverhältnisse für bestimmte Antennenelementkombinationen verfügbar werden. Die Tabelle kann beispielsweise auf Basis des normalen Betriebs erstellt und aktualisiert werden. Denkbar wären solche Messungen auch im Rahmen eines Kalibriervorgangs in der Fertigung des Fahrzeugs, bei Inspektionen, in regelmäßigen zeitlichen Abständen (z.B. einmal pro Tag, Woche, Monat, Jahr etc.), vor Antritt einer Fahrt, beim Starten des Fahrzeugs, etc.

Fig. 1 zeigt darüber optional (gestrichelte Linien) ein Fahrzeug 400 mit einer Kommunikationsvorrichtung 100, mit mehreren Mobilfunkantennen 30, 40 und ggf. mit mehreren Benutzeridentifikationsmodulen. In anderen Worten kann die Kommunikationsvorrichtung 100 in manchen Ausführungsbeispielen in ein Fahrzeug 400 integriert sein.

In Ausführungsbeispielen können die ein oder mehreren Mobilfunksysteme oder Mobilkommunikationssysteme, die in der Fig. 1 durch die beiden Basisstationen 200, 300 angedeutet sind, beispielsweise Mobilfunksystemen entsprechen, die von entsprechenden Standardisierungsgremien, wie z.B. der 3rd Generation Partnership Project (3GPP)-Gruppe, standardisiert werden. In anderen Worten illustriert die Fig.1, dass basierend auf den zumindest zwei Benutzeridentifikationen zwei parallele Verbindungen aufgebaut werden. Diese Verbindungen können zu dem gleichen Mobilkommunikationssystem oder auch zu unterschiedlichen Mobilkommunikationssystemen aufgebaut werden. Denkbar wäre die Verwendung der gleichen oder unterschiedlicher Zugriffstechnologien (2G, 3G, 4G, 5G, etc.) in Mobilkommunikationssystemen unterschiedlicher Betreiber und/oder unterschiedlicher Trägerfrequenzen, oder auch des gleichen Betreibers bei der gleichen Trägerfrequenz. In den beanspruchten Ausführungsbeispielen werden die parallelen Verbindungen zu dem gleichen Mobilkommunikationssystem des gleichen Betreibers bei der gleichen Trägerfrequenz aufgebaut.

Beispiele für solche Mobilkommunikationssysteme umfassen das Global System for Mobile Communications (GSM), Enhanced Data Rates for GSM Evolution (EDGE), GSM EDGE Radio Access Network (GERAN), das Universal Terrestrial Radio Access Network (UTRAN) oder das Evolved UTRAN (E-UTRAN), wie z. B. das Universal Mobile Telecommunication System (UMTS), Long Term Evolution (LTE) oder LTE-Advanced (LTE-A), Systeme der fünften Generation (5G) oder auch Mobilfunksysteme anderer Standards, wie z. B. das Worldwide Interoperability for Microwave Access (WIMAX), IEEE802.16 oder Wireless Local Area Network (WLAN), IEEE802.11, sowie generell ein System, das auf einem Zeitbereichsvielfachzugriffsverfahren (auch engl. "Time Division Multiple Access (TDMA)"), Frequenzbereichsvielfachzugriffsverfahren (auch engl. "Frequency Division Multiple Access (FDMA)"), Kodebereichsvielfachzugriffsverfahren (auch engl. "Code Division Multiple Access (CDMA)"), Orthogonalen Frequenzbereichsvielfachzugriffsverfahren (auch engl. "Orthogonal Frequency Division Multiple Access (OFDMA)") oder einer anderen Technologie bzw. Vielfachzugriffverfahren basiert. Im Folgenden werden die Begriffe Mobilfunksystem, Mobilfunknetz, Mobilkommunikationssystem und Mobilfunknetzwerk synonym benutzt.

Im Folgenden wird angenommen, dass ein solches Mobilfunksystem zumindest einen stationären Sendeempfänger im Sinne einer Basisstation 200, 300 umfasst, der über Anbindung an den leitungsgebundenen Teil des Mobilfunknetzes verfügt. Auf der anderen Seite wird davon ausgegangen, dass das Mobilfunknetz zumindest einen mobilen Sendeempfänger 100 (Mobilfunkendgerät) umfasst, wobei sich der Begriff mobil hier darauf beziehen soll, dass mit diesem Sendeempfänger über die Luftschnittstelle, d. h. kabellos/schnurlos, kommuniziert wird. Ein solcher mobiler Sendeempfänger kann beispielsweise einem tragbaren Telefon, einem Smartphone, einem Tablet-Computer, einem tragbaren Computer oder einem Funkmodul entsprechen, das nicht zwingend mobil in dem Sinne ist, als dass es sich tatsächlich gegenüber seiner Umgebung bewegt. Der Sendeempfänger kann auch stationär sein (z.B. relativ zu einem Fahrzeug oder Kraftfahrzeug), mit dem Mobilfunknetz jedoch drahtlos kommunizieren. Insofern kann die bereits erwähnte Basisstation einer Basisstation einem der oben erwähnten Standards entsprechen, beispielsweise einer NodeB, einer eNodeB, usw.

Ein Basisstations-Sendeempfänger oder eine Basisstation (diese Begriffe können äquivalent verwendet werden) kann ausgelegt sein, um mit einem oder mehreren aktiven Mobilfunkgeräten zu kommunizieren und um in oder benachbart zu einem Versorgungsbereich eines anderen Basisstations-Sendeempfängers oder einer Basisstation zu kommunizieren, z.B. als Makrozell-Basisstation oder als Kleinzell-Basisstation. Somit können Ausführungsformen ein Mobilkommunikationssystem mit einem oder mehreren Mobilfunkendgeräten und einer oder mehreren Basisstationen umfassen, wobei die Basisstations-Sendempfänger Makrozellen oder kleine Zellen bereitstellen können, z. B. Pico-, Metro- oder Femto-Zellen. Ein mobiler Sendeempfänger oder Mobilfunkendgerät kann einem Smartphone (intelligentes Telefon), einem Handy, einem Benutzergerät, einem Funkgerät, einer Mobilen, einer Mobilstation, einem Laptop, einem Notebook, einem Personal Computer (PC), einem Personal Digital Assistant (PDA), einem Universal Serial Bus (USB)-Stick oder-Adapter, einem Fahrzeug, wie z.B. einem Kraftfahrzeug (Kfz), einem Auto, Lastkraftwagen (Lkw), Motoräder, Fahrräder, Züge, Flugzeuge, Schiffe, sämtliche Luft-, Land-, und Wasserfortbewegungsmittel etc., entsprechen. Ein mobiler Sendeempfänger kann auch als engl. "User Equipment (UE)" oder Mobile im Einklang mit der 3GPP- Terminologie bezeichnet werden.

Ein Basisstations-Sendeempfänger oder eine Basisstation kann sich zumindest aus der Sicht eines Mobilfunkendgerätes in einem feststehenden oder zumindest festverbundenen Teil des Netzwerks oder Systems befinden. Ein Basisstation-Sendeempfänger oder eine Basisstation kann auch einem Remote Radio Head, einer Relay-Station, einem Übertragungspunkt, einem Zugriffspunkt (auch engl. "Access Point"), einem Funkgerät, einer Makrozelle, einer kleinen Zelle, einer Mikrozelle, einer Femtozelle, einer Metrozelle usw. entsprechen. Eine Basisstation oder ein Basisstations-Sendeempfänger wird somit als logisches Konzept eines Knotens/einer Einheit zur Bereitstellung eines Funkträgers oder von Funkverbindungen über die Luftschnittstelle verstanden, über den oder die einem Endgerät/mobilen Sendeempfänger Zugang zu einem Mobilfunknetz verschafft wird.

Eine Basisstation oder ein Basisstations-Sendeempfänger kann eine drahtlose Schnittstelle für Mobilfunkendgeräte zu einem verdrahteten Netzwerk darstellen. Die verwendeten Funksignale können durch 3GPP standardisierte Funksignale sein oder allgemein Funksignale in Übereinstimmung mit einer oder mehreren der oben genannten Systeme. So kann eine Basisstation oder ein Basisstations-Sendeempfänger einer NodeB, einer eNodeB, einer Base Transceiver Station (BTS), einem Zugangspunkt, einem Remote Radio Head, einem Übertragungspunkt, einer Relaystation, etc. entsprechen, die in weitere Funktionseinheiten unterteilt sein kann.

Ein Mobilfunkendgerät oder mobiler Sendeempfänger kann einer Basisstation oder Zelle zugeordnet werden oder bei dieser registriert sein. Der Begriff Zelle bezieht sich auf einen Abdeckungsbereich der Funkdienste, die durch eine Basisstation bereitgestellt werden, z.B. von einer NodeB (NB), einer eNodeB (eNB), einem Remote Radio Head, einem Übertragungspunkt, einer Relay-Station, etc. Eine Basisstation kann eine oder mehrere Zellen auf einer oder mehreren Trägerfrequenzen bereitstellen. In manchen Ausführungsformen kann eine Zelle auch einem Sektor entsprechen. Zum Beispiel können Sektoren mit Sektorantennen, die zur Abdeckung eines Winkelabschnitts um einen Antennenstandort herum ausgebildet sind, gebildet werden. In einigen Ausführungsformen kann eine Basisstation beispielsweise zum Betrieb von drei oder sechs Zellen oder Sektoren ausgelegt sein (z.B. 120° im Fall von drei Zellen und 60° im Fall von sechs Zellen). Eine Basisstation kann mehrere Sektorantennen umfassen. Im Folgenden können die Begriffe Zelle und Basisstation auch synonym verwendet werden.

Mit anderen Worten kann in den Ausführungsformen das Mobilkommunikationssystem auch ein heterogenes Zellnetzwerk (HetNet) umfassen, das unterschiedliche Zelltypen aufweist, z.B. Zellen mit geschlossenen Nutzergruppen (auch engl. "Closed Subscriber Group CSG") und offene Zellen sowie Zellen unterschiedlicher Größe, wie z.B. Makrozellen und kleine Zellen, wobei der Abdeckungsbereich einer kleinen Zelle kleiner ist als der Abdeckungsbereich einer Makrozelle. Eine kleine Zelle kann einer Metrozelle, einer Mikrozelle, einer Picozelle, einer Femtozelle usw. entsprechen. Die Abdeckungsbereiche der einzelnen Zellen werden durch die Basisstationen für ihre Versorgungsgebiete bereitgestellt und hängen von den Sendeleistungen der Basisstationen und den Interferenzbedingungen in dem jeweiligen Bereich ab. In manchen Ausführungsformen kann der Abdeckungsbereich einer kleinen Zelle zumindest teilweise von einem Versorgungsbereich einer anderen Zelle umgeben sein oder teilweise mit dem Versorgungsbereich z.B. einer Makrozelle übereinstimmen oder überlappen. Kleine Zellen können eingesetzt werden, um die Kapazität des Netzwerks zu erweitern. Eine Metrozelle kann daher verwendet werden, um eine kleinere Fläche als eine Makrozelle abzudecken, z.B. werden Metrozellen verwendet, um eine Straße oder einen Abschnitt in einem Ballungsgebiet abzudecken. Für eine Makrozelle kann der Abdeckungsbereich einen Durchmesser in der Größenordnung von einem Kilometer oder mehr haben, z.B. entlang von Autobahnen auch 10km oder mehr, für eine Mikrozelle kann der Abdeckungsbereich einen Durchmesser von weniger als einem Kilometer haben und eine Picozelle kann einen Abdeckungsbereich mit einen Durchmesser von weniger als 100m haben. Eine Femtozelle kann den kleinsten Abdeckungsbereich aufweisen und sie kann verwendet werden, um beispielsweise einen Haushalts-, einen Kfz- oder einen Gate-Bereich auf dem Flughafen abzudecken, d.h. ihr Sendegebiet kann einen Durchmesser von unter 50m aufweisen.

In Ausführungsbeispielen meint die Kommunikation dabei, dass die Kommunikationsvorrichtung Signale oder Daten in dem Mobilkommunikationssystem sendet oder empfängt oder beides. Die Auswahleinrichtung 10 kann dabei als Schalt- oder Schaltermatrix ausgebildet sein. Beispielsweise können Transistorschalter dazu verwendet werden, um die Mobilfunkantennen mit den jeweiligen Aus- oder Eingängen des Sendeempfängermoduls 20 zu koppeln oder zu verbinden. Hierbei können beispielsweise Hochfrequenzschalter (HF-Switches), HF-Komponenten, Kaskaden- Parallel-, oder Reihenschaltungen von solchen Schaltern zum Einsatz kommen. In anderen Worten kann die Auswahleinrichtung 10 in Ausführungsbeispielen als beliebige Multiplex- oder Demultiplex-Schaltung bzw. Komponente realisiert sein. Eine Mobilfunktantenne kann als Antennenelement realisiert sein, beispielsweise kann diese auch als Teil eines Antennenfeldes realisiert sein. Generell ist eine Mobilfunkantenne in Ausführungsbeispielen nicht auf einen bestimmten Antennentyp eingeschränkt, sondern kann beispielsweise eine Dipolantenne, eine Richtantenne, eine Yagi-Antenne, eine Hornantenne, eine Patch-Antenne etc. sein.

In Ausführungsbeispielen kann das Sendeempfängermodul 20 einem beliebigen Modul mit Empfangs- und/oder Sendemitteln, einem Sender, einem Empfänger, einem Sendeempfänger usw. entsprechen. Das Sendeempfängermodul 20 kann dabei typische Sender- bzw. Empfängerkomponenten enthalten. Darunter können beispielsweise ein oder mehrere Antennenanschlüsse, ein oder mehrere Filter, ein oder mehrere Mischer, ein oder mehrere Verstärker, ein oder mehrere Diplexer, ein oder mehrere Duplexer, usw. fallen. Wie die Fig. 1 zeigt, kann über das Auswahlsignal 50 eine Mobilfunkantenne 30, 40 von dem Sendeempfängermodul 20 über die Auswahleinrichtung 10 ausgewählt werden. Die in dem Sendeempfängermodul 20 angedeuteten Blöcke können dabei Ein- oder Ausgangsstufen, Kontrollmodulen usw. entsprechen. In Ausführungsbeispielen kann ein solches Kontrollmodul in dem Sendeempfängermodul 20 einem beliebigen Controller oder Prozessor oder einer programmierbaren Hardwarekomponente entsprechen. Beispielsweise kann das Kontrollmodul auch als Software oder Computerprogramm realisiert sein, die oder das für eine entsprechende Hardwarekomponente programmiert ist. Insofern kann das Kontrollmodul als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls denkbar.

In Ausführungsbeispielen können die Benutzeridentifikationen beispielsweise Identifikationen für verschiedene Mobilkommunikationssysteme umfassen, oder eine Identifikation eines Benutzers (z.B. Fahrer eines Fahrzeugs für Mobilfunkdienste) und die eines Fahrzeugs (zur Nutzung von Telemetrie oder anderen Diensten). In einigen weiteren Ausführungsbeispielen kann eine dynamische Auf- und Zuteilung von Antennenelementen über die im Fahrzeug verbauten SIM-Karten aufgrund des Kommunikationsbedarfs jeder SIM-Karte und der erforderlichen Isolation zwischen den unterschiedlichen Mobilfunkverbindungen stattfinden. Das Sendeempfängermodul 20 kann daher zumindest in manchen Ausführungsbeispielen zwei oder mehr Schnittstellen für zwei oder mehr Benutzeridentifikationsmodule, z.B. SIMs oder USIMs, umfassen. Basierend auf den zwei oder mehr Benutzeridentifikationen können zwei oder mehr parallele Verbindungen in den ein oder mehreren Mobilkommunikationssystemen 200, 300 aufgebaut werden.

Daraus folgend können Antennenelemente/Mobilfunkantennen 30, 40 einer SIM-Karte dynamisch (d.h. im Laufe einer Mobilfunkkommunikation) zugeordnet werden, wenn diese einen erhöhten Kommunikationsbedarf aufweist, wie beispielsweise in Form von Datenrate, Zuverlässigkeit oder Latenz, und die Zuordnung dieser Antennenelemente/Mobilfunkantennen 30, 40 die minimale Isolation zwischen allen Antennenelementen gemäß einer aktuellen Frequenzbänderkonfiguration der Mobilfunkverbindungen nicht verletzt. Die Isolation zwischen einzelnen Antennen kann frequenzabhängig/wellenlängenabhängig und installationsabhängig sein (z.B. Position am Fahrzeug, relative Position/Ausrichtung der Antennen untereinander, etc.). In anderen Worten können zwischen den einzelnen Antennen Interferenzen oder auch Übersprechen entstehen, die bzw. das von der jeweiligen Frequenz abhängig ist und die bzw. das bei der Auswahl der Antennen berücksichtigt werden kann.

Das Sendeempfängermodul 20 kann ausgebildet sein, um das Auswahlsignal 50 basierend auf Qualitätskriterien für die zwei oder mehr parallelen Verbindungen zu generieren. Das Sendeempfängermodul 20 kann ausgebildet sein, um Mobilfunkantennen 30, 40 über das Auswahlsignal 50 dynamisch basierend auf Anforderungen an eine Datenrate, eine Zuverlässigkeit oder einer Latenz auszuwählen. Darüber hinaus ist das Sendeempfängermodul 20 in manchen Ausführungsbeispielen ausgebildet, um bei der Auswahl eine Isolation zwischen den Mobilfunkantennen 30, 40 zu berücksichtigen.

Die Isolation (auch Interferenz oder Übersprechen) kann in diesem Fall auch dynamisch sein und kann sich im Laufe der Zeit verändern, beispielsweise aufgrund von unterschiedlichen Frequenzkonfigurationen oder auch Zugriffstechnologien in den ein oder mehr Mobilfunkverbindungen. Bestimmte Frequenzkombinationen können aus einer Interferenzperspektive heraus betrachtet problematischer sein. Dabei können mehrere Faktoren Einfluss nehmen. Beispielsweise kann ein Abstand zwischen Frequenzkanälen, ein Mangel an Synchronisation zwischen den Frequenzkanälen, ein Multiplexing-Verfahren in Frequenzkanälen (z.B. LTE FDD / LTE TDD), die gegenseitige Störung und damit die Auswahl in Ausführungsbeispielen beeinflussen. Diese Tatsache zusammen mit der Verbauposition der Antennen und der Karosserie des Fahrzeugs kann in Ausführungsbeispielen die Eignung der Antennen für die Mobilfunkkommunikation mitbestimmen. So kann das Sendeempfängermodul 20 ausgebildet sein, um bei der Auswahl Zugriffstechnologien der ein oder mehreren Mobilkommunikationssysteme 200, 300 zu berücksichtigen oder auch Kombinationen der einzelnen Faktoren wie Verbauposition an der Karosserie des Fahrzeugs, Qualitätsanforderungen (QoS) der jeweiligen Dienste, die Frequenzkanäle der Mobilkommunikationssysteme 200, 300, die jeweiligen Zugriffstechnologien, Synchronisation, etc.

Die erforderliche Isolation kann je nach Frequenzkombination von den Eigenschaften des im Fahrzeug verbauten Kommunikationsmoduls abhängig sein und kann im Voraus bestimmt werden, sodass diese beispielsweise in Form einer Tabelle/ gespeichert werden kann.

Ausführungsbeispiele können so die dynamische Auswahl mehrerer Antennen für MIMO-Anwendungen vorsehen. Beispielsweise kann als Indikator oder Auswahlkriterium für die jeweiligen Antennen eine Antennenkorrelation und/oder eine Antennenisolation verwendet werden. So kann eine vorteilhafte (theoretisch sogar optimale) Auswahl/Zuordnung von Antennen zu zwei NAD, die beide MIMO-fähig sind, erfolgen. In Ausführungsbeispielen kann demnach eine Betrachtung der Isolation und/oder Antennenkorrelation zum Einsatz kommen, die im Vergleich zu über das Mobilfunknetz gemessenen/bestimmten Qualitätsindikatoren, Vorteile aufgrund der berücksichtigten konkreten Physical-Layer Parameter (Physikalische Protokollschicht, Funkparameter) bieten kann.

Ausführungsbeispiele können so automotive, spezifische Verbaupositionen der Antennen beispielsweise in Form einer Korrelationsmatrix und/oder Isolationsmatrix berücksichtigen. Eine solche Matrix kann beispielsweise die gegenseitige Isolation, Dämpfung, Signalkorrelation, ein Übersprechen, eine Kopplung aller betrachteten Antennenpaare wiedergeben. Diese Werte werden z.B. bei Fahrzeugauslegung initial bestimmt und dem Antennenauswahlalgorithmus/Verfahren im Rahmen der fahrzeug-/derivatspezifischen Codierung frequenzabhängig für alle Mobilfunkfrequenzen übergeben (z.B. per Lookup-Table). Die Berücksichtigung dieser Werte kann im Rahmen einer zusätzlichen Gewichtung innerhalb des Mobilfunkstandard-spezifischen Antennenauswahlalgorithmus erfolgen. So können besonders günstig und gut positionierte Antennenkombinationen bevorzugt werden.

Ausführungsbeispiele können im Automotive-Kontext die Größe des Gesamtfahrzeuges in Relation zur Wellenlänge der typischerweise verwendeten Antennen ausnutzen. So kann eine besondere Eignung von einzelnen Antennen oder Antennenkombinationen für bestimmte Frequenzbereiche und Kanalszenarien (urbaner Kanal, ruraler Kanal etc.) geschickt ausgenutzt werden. Die Berücksichtigung kann durch die oben erwähnte zusätzliche Gewichtung unter Berücksichtigung der Position jeder Antenne am Fahrzeug, der Interaktion von Antennenkombinationen am Fahrzeug und unter Berücksichtigung der jeweiligen Nutzfrequenz erfolgen.

Durch die oben genannte zusätzliche Gewichtung ergibt sich zusätzlich eine Default-Zuordnung (Grundzuordnung), d.h. eine beste Zuordnung von Antennen oder Antennenkombinationen zu den einzelnen NADs. In typischen automotiven Nutzungsszenarien (Fahren auf der Autobahn) ändern sich die Kanalszenarien entsprechend schnell. Zumindest manche Ausführungsbeispiele nutzen dementsprechend eine kontinuierliche Anpassung der Antennenselektion auf Basis von Messungen der Kanalmatrix. Darüber hinaus kann eine Ableitung von Parametern zur Beschreibung der MIMO-Fähigkeit des Gesamtsystems aus Antennensystem (inkl. aller Kombinationen) und Mobilfunkkanal, wie Konditionszahl oder Elliptizität, erfolgen.

Ein weiteres Ausführungsbeispiel lässt sich mit Hilfe des folgenden Beispiels erklären. In einem Fahrzeug mit insgesamt sechs Antennenelementen seien zwei SIM-Karten verbaut, SIM 1 und SIM 2.

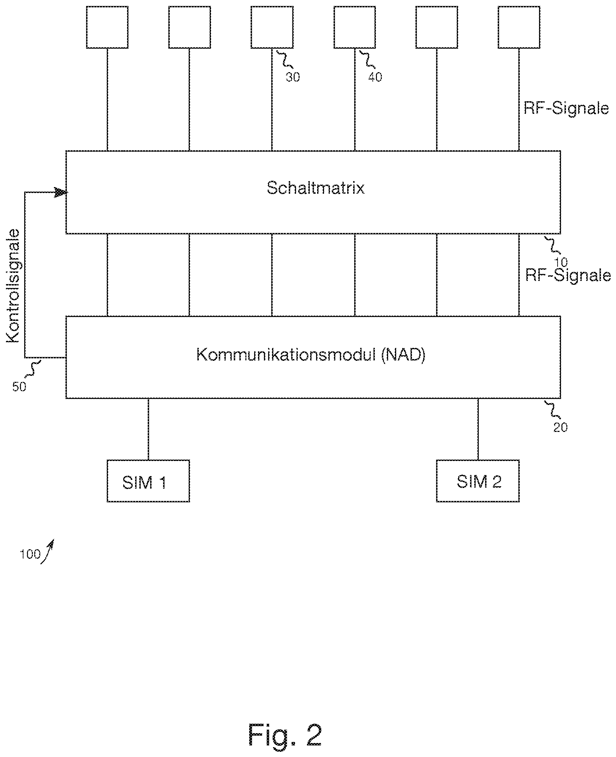

Fig. 2 zeigt ein solches Ausführungsbeispiel einer Kommunikationsvorrichtung 100 für ein Fahrzeug. Das Sendeempfängermodul 20 umfasst zwei Schnittstellen zu den Benutzeridentifikationsmodulen für SIM 1 und SIM 2. Diese sind für den Mobilfunkvertrag des OEMs beziehungsweise den des Fahrers vorgesehen. Die Auswahleinrichtung 10 ist hier als Schaltmatrix implementiert, die mit den verschiedenen Mobilfunkantennen 30, 40 gekoppelt ist. Die Auswahleinrichtung 10 kann demnach als Schaltmatrix zwischen den ein oder mehreren Mobilfunkantennen 30, 40 und ein oder mehreren Ein- und/oder Ausgängen des Sendeempfängermoduls 20 ausgebildet sein, die beispielsweise im Hochfrequenzbereich (auch englisch Radio Frequency (RF)) umschaltet. Dabei kommt prinzipiell eine Mehrzahl von Mobilfunkantennen in Frage, wobei in der Fig. 2 nur zwei stellvertretend für die Mehrzahl als Beispiel bezeichnet sind. Das Sendeempfängermodul 20 ist mit der Schaltmatrix 10 gekoppelt und generiert Kontrollsignale als Auswahlsignal 50 für die Schaltmatrix 10 zur Auswahl entsprechender Mobilfunkantennen 30, 40. Das Sendeempfängermodul ist in diesem Ausführungsbeispiel als Kommunikationsmodul (auch englisch Network Access Device (NAD), Netzwerk-Zugangsbaugruppe) implementiert.

Darüber hinaus wird im vorliegenden Ausführungsbeispiel angenommen, dass zwei Antennenelemente, die in relativ kurzer Entfernung von einander stehen, der ersten SIM-Karte (SIM 1) fest zugeordnet werden. Zwei andere Antennenelemente, die ebenfalls in relativ kurzer Entfernung von einander im Fahrzeug positioniert sind, aber in relativ weiter Entfernung von den ersten beiden Antennenelementen angeordnet sind, werden stattdessen der zweiten SIM-Karte (SIM 2) fest zugeordnet. In diesem Ausführungsbeispiel ist das Sendeempfängermodul 20 demnach ausgebildet, um zusätzlich über den Benutzeridentifikationen fest zugeordnete Mobilfunkantennen in den ein oder mehreren Mobilkommunikationssystemen 200, 300 zu kommunizieren.

Im betrachteten Ausführungsbeispiel sind noch zwei weitere Antennenelemente 30, 40 im Fahrzeug vorhanden, die dynamisch jeder der beiden SIM-Karten (SIM 1, SIM 2) zugeordnet werden können. Diese zwei Antennenelemente 30, 40 werden der ersten SIM Karte (SIM 1) zugeordnet, falls diese aufgrund der laufenden Anwendungsfälle einen erhöhten Kommunikationsbedarf aufweist und nur unter der Voraussetzung, dass die Isolation zwischen diesen Antennenelementen 30, 40 und der zweiten SIM-Karten (SIM 2) fest zugeordneten Antennenelementen ausreichend ist. Auf der anderen Seite werden dieselben zwei Antennenelemente der zweiten SIM Karte (SIM 2) zugeordnet, falls diese aufgrund der laufenden Anwendungsfälle einen erhöhten Kommunikationsbedarf aufweist und nur unter der Voraussetzung, dass die Isolation zwischen diesen Antennenelementen und der ersten SIM-Karte (SIM 1) fest zugeordneten Antennenelementen ausreichend ist.

In manchen Ausführungsbeispielen ist das Sendeempfängermodul 20 demnach ausgebildet, um basierend auf dem Auswahlsignal 50 alle auswählbaren Mobilfunkantennen 30, 40 einer der Benutzeridentifikationen, z.B. SIM 1, SIM 2, zuzuordnen. Bei dieser Zuweisung wird vorliegend jeweils die frequenz- und bauraumabhängige Isolation zwischen den Subsystemen berücksichtigt. Das vorherige Verfahren lässt sich beispielsweise mit dem in der Fig. 2 gezeigten System realisieren. Das System weist ein Kommunikationsmodul 20 bzw. NAD (Network Access Device) auf, eine Schaltmatrix 10 und die Antennen-Inputs bzw. -Outputs (Eingänge und Ausgänge) der jeweiligen Antennenelemente 30, 40. Die Antenneninputs bzw. - Outputs im NAD 20 können mittels der Schaltmatrix 10 unterschiedlichen Antennenelementen 30, 40 auf Basis von Kontrollsignalen 50 aus dem NAD 20 zugeordnet werden. Normalerweise werden Antenneninputs bzw. -Outputs im NAD 20 den SIM-Karten fest zugewiesen. Durch das vorgeschlagene Ausführungsbeispiel eines Systems kann der NAD 20 in Ausführungsbeispielen jeder SIM-Karte die beste Auswahl von Antennenelementen 30, 40 zuordnen, basierend auf der aktuellen Frequenzkombination der unterschiedlichen Mobilfunkverbindungen, der gespeicherten erforderlichen Isolation zwischen Antennenelementen für jede Frequenzkombination und des aktuellen Kommunikationsbedarfs der SIM-Karten.

Ausführungsbeispiele können die Anwendung von mehreren SIM-Karten im Fahrzeug mit einer reduzierten Anzahl von Antennenelementen verbessern, in manchen Fällen sogar optimieren. Dies kann nicht nur zu einer Kosten- und Gewichtseinsparung führen, sondern auch zu einem verbesserten Kundenerlebnis bei Anwendungsfällen im Bereich der Fahrzeugkonnektivität.

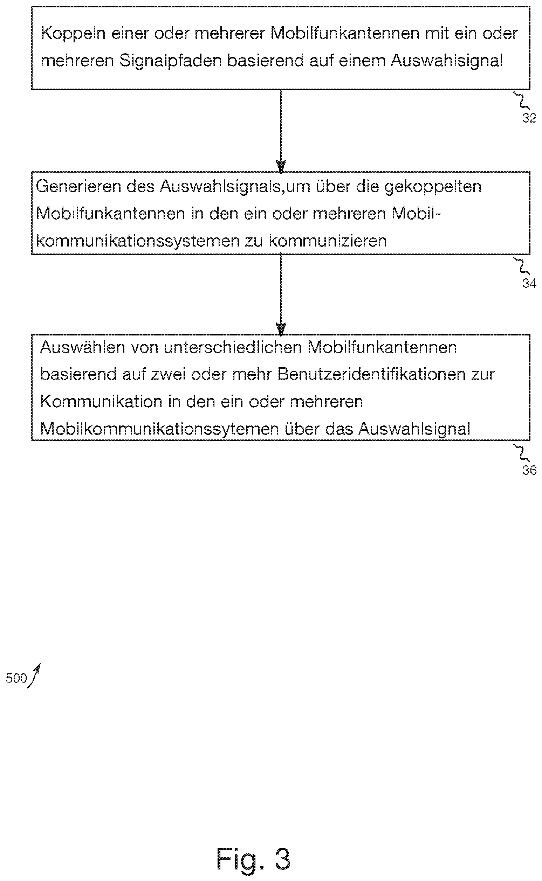

Fig. 3 zeigt ein Blockdiagramm eines Ausführungsbeispiels eines Verfahrens 500 zur Kommunikation. Das Verfahren 500 zur Kommunikation in einem oder mehreren Mobilkommunikationssystemen 100, 200 umfasst ein Koppeln 32 einer oder mehrerer Mobilfunkantennen 30, 40 mit ein oder mehreren Signalpfaden basierend auf einem Auswahlsignal 50. Das Verfahren 500 umfasst ferner ein Generieren 34 des Auswahlsignals 50, um über die gekoppelten Mobilfunkantennen 30, 40 in den ein oder mehreren Mobilkommunikationssystemen 200, 300 zu kommunizieren. Das Verfahren 500 umfasst darüber hinaus ein Auswählen 36 von unterschiedlichen Mobilfunkantennen 30, 40 basierend auf zwei oder mehr Benutzeridentifikationen zur Kommunikation in den ein oder mehreren Mobilkommunikationssystemen 100, 200 über das Auswahlsignal 50. Des weiteren umfasst das Verfahren ein Aufbauen, basierend auf den zwei oder mehr Benutzeridentifikationen, zweier oder mehrerer paralleler Verbindungen zu dem gleichen Mobilkommunikationssystem des gleichen Betreibers bei der gleichen Trägerfrequenz.

In weiteren Ausführungsbeispielen kann das Auswählen 36 der Antennen mehrere Schritte umfassen, beispielsweise eine Erkennung der Frequenzkanäle auf beiden SIM-Karten, eine Einschätzung von Interferenzen durch Messungen oder durch "Look-up Tables" auf Basis der Frequenzkanäle und Verbaupositionen/Anbauorte der Antennen im Fahrzeug oder eine Auswertung der Qualitätsanforderungen der laufenden Anwendungen. Die Auswahl kann einmalig am Anfang der Kommunikation, regelmäßig oder nach der Auslösung bestimmter Konditionen stattfinden (beispielsweise Überschreitung einer Interferenzschwelle oder Unterschreitung eines Qualitätsparameters).

Ein weiteres Ausführungsbeispiel ist ein Computerprogramm zur Durchführung eines der hierin beschriebenen Verfahren, wenn das Computerprogramm auf der Kommunikationsvorrichtung ausgeführt wird. Die in der vorstehenden Beschreibung und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden. Die Erfindung wird durch den Schutzumfang der nachstehenden Patentansprüche beschränkt.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Eine Kommunikationsvorrichtung (100) zur Kommunikation in einem Mobilkommunikationssystem (200; 300), mit
einer Auswahleinrichtung (10) zur Verkopplung einer oder mehrerer Mobilfunkantennen (30; 40) mit ein oder mehreren Signalpfaden basierend auf einem Auswahlsignal (50); und
einem Sendeempfängermodul (20) das ausgebildet ist, um das Auswahlsignal (50) zu generieren und um über die gekoppelten Mobilfunkantennen (30; 40) im Mobilkommunikationssystem (200; 300) zu kommunizieren, wobei das Sendeempfängermodul (20) ausgebildet ist, um basierend auf zwei oder mehr Benutzeridentifikationen unterschiedliche Mobilfunkantennen (30; 40) zur Kommunikation im Mobilkommunikationssystem (200; 300) über das Auswahlsignal (50) auszuwählen, wobei das Sendeempfängermodul (20) ausgebildet ist, um bei der Auswahl eine Isolation und/oder eine Korrelation zwischen den Mobilfunkantennen (30; 40) zu berücksichtigen,
wobei das Sendeempfängermodul (20) ausgebildet ist, um basierend auf den zwei oder mehr Benutzeridentifikationen zwei oder mehr parallele Verbindungen zu dem gleichen Mobilkommunikationssystem (200; 300) des gleichen Betreibers bei der gleichen Trägerfrequenz aufzubauen.

2. Die Kommunikationsvorrichtung (100) gemäß Anspruch 1, wobei das Sendeempfängermodul (20) zwei oder mehr Schnittstellen für zwei oder mehr Benutzeridentifikationsmodule umfasst.

3. Die Kommunikationsvorrichtung (100) gemäß Anspruch 2, wobei das Sendeempfängermodul (20) ausgebildet ist, um das Auswahlsignal basierend auf Qualitätskriterien für die zwei oder mehr parallelen Verbindungen zu generieren.

4. Die Kommunikationsvorrichtung (100) gemäß einem der Ansprüche 2 oder 3, wobei das Sendeempfängermodul (20) ausgebildet ist, um Mobilfunkantennen (30;40) über das Auswahlsignal dynamisch basierend auf Anforderungen an eine Datenrate, eine Zuverlässigkeit oder einer Latenz auszuwählen.

5. Die Kommunikationsvorrichtung (100) gemäß einem der Ansprüche 1 bis 4, wobei das Sendeempfängermodul (20) ausgebildet ist, um bei der Auswahl die Zugriffstechnologie des Mobilkommunikationssystems (200;300) zu berücksichtigen.

6. Die Kommunikationsvorrichtung (100) gemäß einem der Ansprüche 1 bis 5, wobei das Sendeempfängermodul (20) ausgebildet ist, um zusätzlich über den Benutzeridentifikationen fest zugeordnete Mobilfunkantennen (30; 40) im Mobilkommunikationssystem (200; 300) zu kommunizieren.

7. Die Kommunikationsvorrichtung (100) gemäß Anspruch 6, wobei das Sendeempfängermodul (20) ausgebildet ist, um basierend auf dem Auswahlsignal (50) alle auswählbaren Mobilfunkantennen (30; 40) einer der Benutzeridentifikationen zuzuordnen.

8. Die Kommunikationsvorrichtung (100) gemäß einem der Ansprüche 1 bis 7, wobei die Auswahleinrichtung (10) als Schaltmatrix zwischen den ein oder mehreren Mobilfunkantennen (30; 40) und ein oder mehreren Ein- und/oder Ausgängen des Sendeempfängermoduls (20) ausgebildet ist.

9. Ein Fahrzeug (400) mit einer Kommunikationsvorrichtung (100) gemäß einem der vorangehenden Ansprüche, mit mehreren Mobilfunkantennen (30; 40) und mit mehreren Benutzeridentifikationsmodulen.

10. Ein Verfahren (500) zur Kommunikation in einem Mobilkommunikationssystem (200; 300), mit
Koppeln (32) einer oder mehrerer Mobilfunkantennen (30; 40) mit ein oder mehreren Signalpfaden basierend auf einem Auswahlsignal (50); Generieren (34) des Auswahlsignals (50) um über die gekoppelten Mobilfunkantennen (30; 40) im Mobilkommunikationssystem (200; 300) zu kommunizieren; und
Auswählen (36) von unterschiedlichen Mobilfunkantennen (30; 40) basierend auf zwei oder mehr Benutzeridentifikationen zur Kommunikation im Mobilkommunikationssystem (200; 300) über das Auswahlsignal (50) unter Berücksichtigung einer Isolation und/oder einer Korrelation zwischen den Mobilfunkantennen (30; 40), sowie Aufbauen, basierend auf den zwei oder mehr Benutzeridentifikationen, zweier oder mehrerer paralleler Verbindungen zu dem gleichen Mobilkommunikationssystem (200; 300) des gleichen Betreibers bei der gleichen Trägerfrequenz.

11. Computerprogramm zur Durchführung des Verfahrens (500) gemäß Anspruch 10 auf einer Kommunikationsvorrichtung gemäß einem der Ansprüche 1 bis 8, wenn das Computerprogramm auf einem Prozessor, einem Mikrocontroller oder einer programmierbaren Hardwarekomponente ausgeführt wird.

## Claims

1. A communication apparatus (100) for communication in a mobile communication system (200; 300), comprising
a selection device (10) for coupling one or more mobile radio antennas (30; 40) to one or more signal paths based on a selection signal (50); and a transceiver module (20) which is configured to generate the selection signal (50) and to communicate via the coupled mobile radio antennas (30; 40) in the mobile communication system (200; 300), wherein the transceiver module (20) is configured to select different mobile radio antennas (30; 40) for communication in the mobile communication system (200; 300) via the selection signal (50) based on two or more user identifications, wherein the transceiver module (20) is configured to take into account an isolation and/or a correlation between the mobile radio antennas (30; 40) during the selection, wherein the transceiver module (20) is configured to establish two or more parallel connections to the same mobile communication system (200; 300) of the same operator at the same carrier frequency based on the two or more user identifications.

2. The communication apparatus (100) according to claim 1, wherein the transceiver module (20) comprises two or more interfaces for two or more user identification modules.

3. The communication apparatus (100) according to claim 2, wherein the transceiver module (20) is configured to generate the selection signal based on quality criteria for the two or more parallel connections.

4. The communication apparatus (100) according to one of claims 2 or 3, wherein the transceiver module (20) is configured to dynamically select mobile radio antennas (30; 40) via the selection signal based on requirements for a data rate, a reliability or a latency.

5. The communication apparatus (100) according to one of claims 1 to 4, wherein the transceiver module (20) is configured to take into account the access technology of the mobile communication system (200; 300) during the selection.

6. The communication apparatus (100) according to one of claims 1 to 5, wherein the transceiver module (20) is configured to additionally communicate via mobile radio antennas (30; 40) fixedly assigned to the user identifications in the mobile communication system (200; 300).

7. The communication apparatus (100) according to claim 6, wherein the transceiver module (20) is configured to assign all selectable mobile radio antennas (30; 40) to one of the user identifications based on the selection signal (50).

8. The communication apparatus (100) according to one of claims 1 to 7, wherein the selection device (10) is configured as a switching matrix between the one or more mobile radio antennas (30; 40) and one or more inputs and/or outputs of the transceiver module (20).

9. A vehicle (400) comprising a communication apparatus (100) according to one of the preceding claims, comprising a plurality of mobile radio antennas (30; 40) and comprising a plurality of user identification modules.

10. A method (500) for communication in a mobile communication system (200; 300), comprising
coupling (32) one or more mobile radio antennas (30; 40) to one or more signal paths based on a selection signal (50);
generating (34) the selection signal (50) to communicate via the coupled mobile radio antennas (30; 40) in the mobile communication system (200; 300); and
selecting (36) different mobile radio antennas (30; 40) based on two or more user identifications for communication in the mobile communication system (200; 300) via the selection signal (50) taking into account an isolation and/or a correlation between the mobile radio antennas (30; 40), and establishing, based on the two or more user identifications, two or more parallel connections to the same mobile communication system (200; 300) of the same operator at the same carrier frequency.

11. Computer program for carrying out the method (500) according to claim 10 on a communication apparatus according to one of claims 1 to 8, when the computer program is executed on a processor, a microcontroller or a programmable hardware component.

## Revendications

1. Un dispositif de communication (100) pour la communication dans un système de communication mobile (200 ; 300), comprenant
un dispositif de sélection (10) pour coupler une ou plusieurs antennes de radiocommunication mobile (30 ; 40) à un ou plusieurs trajets de signal sur la base d'un signal de sélection (50) ; et un module émetteur-récepteur (20) qui est conçu pour générer le signal de sélection (50) et pour communiquer par l'intermédiaire des antennes de radiocommunication mobile couplées (30 ; 40) dans le système de communication mobile (200 ; 300), le module émetteur-récepteur (20) étant conçu pour sélectionner différentes antennes de radiocommunication mobile (30 ; 40) pour la communication dans le système de communication mobile (200 ; 300) par l'intermédiaire du signal de sélection (50) sur la base de deux ou plusieurs identifications d'utilisateur, le module émetteur-récepteur (20) étant conçu pour prendre en compte une isolation et/ou une corrélation entre les antennes de radiocommunication mobile (30 ; 40) lors de la sélection,
le module émetteur-récepteur (20) étant conçu pour établir deux ou plusieurs connexions parallèles au même système de communication mobile (200 ; 300) du même opérateur à la même fréquence porteuse sur la base des deux ou plusieurs identifications d'utilisateur.

2. Le dispositif de communication (100) selon la revendication 1, le module émetteur-récepteur (20) comprenant deux ou plusieurs interfaces pour deux ou plusieurs modules d'identification d'utilisateur.

3. Le dispositif de communication (100) selon la revendication 2, le module émetteur-récepteur (20) étant conçu pour générer le signal de sélection sur la base de critères de qualité pour les deux ou plusieurs connexions parallèles.

4. Le dispositif de communication (100) selon l'une des revendications 2 ou 3, le module émetteur-récepteur (20) étant conçu pour sélectionner dynamiquement des antennes de radiocommunication mobile (30 ; 40) par l'intermédiaire du signal de sélection sur la base d'exigences relatives à un débit de données, une fiabilité ou une latence.

5. Le dispositif de communication (100) selon l'une des revendications 1 à 4, le module émetteur-récepteur (20) étant conçu pour prendre en compte la technologie d'accès du système de communication mobile (200 ; 300) lors de la sélection.

6. Le dispositif de communication (100) selon l'une des revendications 1 à 5, le module émetteur-récepteur (20) étant conçu pour communiquer en outre par l'intermédiaire d'antennes de radiocommunication mobile (30 ; 40) attribuées de manière fixe aux identifications d'utilisateur dans le système de communication mobile (200 ; 300).

7. Le dispositif de communication (100) selon la revendication 6, le module émetteur-récepteur (20) étant conçu pour attribuer toutes les antennes de radiocommunication mobile (30 ; 40) sélectionnables à l'une des identifications d'utilisateur sur la base du signal de sélection (50).

8. Le dispositif de communication (100) selon l'une des revendications 1 à 7, le dispositif de sélection (10) étant conçu comme une matrice de commutation entre la ou les antennes de radiocommunication mobile (30 ; 40) et une ou plusieurs entrées et/ou sorties du module émetteur-récepteur (20).

9. Un véhicule (400) comprenant un dispositif de communication (100) selon l'une des revendications précédentes, comprenant plusieurs antennes de radiocommunication mobile (30 ; 40) et comprenant plusieurs modules d'identification d'utilisateur.

10. Un procédé (500) pour la communication dans un système de communication mobile (200 ; 300), comprenant
le couplage (32) d'une ou plusieurs antennes de radiocommunication mobile (30 ; 40) à un ou plusieurs trajets de signal sur la base d'un signal de sélection (50) ;
la génération (34) du signal de sélection (50) pour communiquer par l'intermédiaire des antennes de radiocommunication mobile couplées (30 ; 40) dans le système de communication mobile (200 ; 300) ; et
la sélection (36) de différentes antennes de radiocommunication mobile (30 ; 40) sur la base de deux ou plusieurs identifications d'utilisateur pour la communication dans le système de communication mobile (200 ; 300) par l'intermédiaire du signal de sélection (50) en tenant compte d'une isolation et/ou d'une corrélation entre les antennes de radiocommunication mobile (30 ; 40), ainsi que l'établissement, sur la base des deux ou plusieurs identifications d'utilisateur, de deux ou plusieurs connexions parallèles au même système de communication mobile (200 ; 300) du même opérateur à la même fréquence porteuse.

11. Programme d'ordinateur pour la mise en œuvre du procédé (500) selon la revendication 10 sur un dispositif de communication selon l'une des revendications 1 à 8, lorsque le programme d'ordinateur est exécuté sur un processeur, un microcontrôleur ou un composant matériel programmable.
